# EUROPEAN PATENT APPLICATION

(11) **EP 4 625 021 A1**
(43) Date of publication of application: **01.10.2025**
(21) Application number: 25162624.8
(22) Date of filing: 10.03.2025
(51) Int. Cl.: G02B 21/26, G02B 21/00, G02B 21/33, G02B 21/18, G02B 21/24

(54) **INVERTED MICROSCOPE**

(30) Priority: 28.03.2024 JP 2024054538
(71) Applicant: Evident Corporation, Kamiina-gun, Nagano 399-0495 (JP)
(72) Inventor: OKAHIRA, Hiroyuki, Nagano, 3990495 (JP)
(74) Representative: Gunzelmann, Rainer

(57) **Abstract**

An inverted microscope includes: a liquid-immersion objective lens 102a; a dry objective lens 102b; a rotating revolver 103 that is capable of mounting the plurality of objective lenses, and that rotates to switch between the objective lenses; a support stand 100; a focus mechanism 104 that moves the rotating revolver 103 with respect to the support stand 100 in a direction of an optical axis O3a; an immersion-liquid feeding base 11a fixed to the support stand 100; an immersion-liquid feeding section 11b that is movable with respect to the immersion-liquid feeding base 11a in a direction along the optical axis, and that includes an immersion-liquid supply pipe 11c that supplies immersion liquid to the liquid-immersion objective lens; and a transmission mechanism 11ba and 11a that transmits a movement of the focus mechanism in the direction of the optical axis to the immersion-liquid feeding section when the liquid-immersion objective lens is placed within a focus range on the optical axis, and that releases the movement of the focus mechanism in the direction of the optical axis from being transmitted to the immersion-liquid feeding section when the liquid-immersion objective lens is on the optical axis and is placed in a downward region out of the focus range.

## Description

### BACKGROUND OF THE INVENTION

### 1. TECHNICAL FIELD

The present disclosure relates to an inverted microscope for observing an observation object (specimen) from the lower side, and in particular, to an inverted microscope including an immersion-liquid supplying apparatus that supplies liquid (immersion liquid) between an objective lens and a cover glass.

### 2. DESCRIPTION OF THE RELATED ART

Conventionally, optical microscopes, which use a plurality of optical lenses to observe a magnified optical image of an observation object, are widely used in, for example, the medical fields, the industrial fields, and the like.

Conventional optical microscopes are usually configured to include, for example, an observation optical system including of an objective lens that forms a magnified optical image of the observation object and an eyepiece, and an illumination optical system that illuminates the observation object.

In this type of optical microscope, there are two types: an upright type in which the objective lens is positioned on the upper side of the observation object (hereinafter referred to as "specimen") and the specimen is observed from the upper side; and an inverted type in which the objective lens is positioned on the lower side of the specimen and the specimen is observed from the lower side.

In these types of optical microscopes, as a means for improving the numerical aperture and obtaining smaller resolution, there has been generally put into practice a liquid-immersion objective lens in a form in which a liquid such as, for example, water or oil (hereinafter referred to as "immersion liquid") is filled, for example, between an objective lens and a specimen (cover glass).

In the case where a liquid-immersion objective lens is used in a conventional optical microscope, an operation is performed in which a dropper or the like is used to drip immersion liquid onto the cover glass or onto a distal end lens of the objective lens, for example, before placing the liquid-immersion objective lens into an optical path of the observation optical system. Such an operation exerts a cumbersome burden on the user of the instrument.

In addition, in the case where a microscope is used to perform an observation over a long period of time (such as, for example, time-lapse observation), it is necessary to continuously supply the immersion liquid at predetermined time intervals to address evaporation of the immersion liquid or the like, which is a major operational burden on the user of the instrument.

To address this issue, in recent years, there have been proposed a variety of optical microscopes using a liquid-immersion objective lens, that include an immersion-liquid supplying apparatus that can automatically supply immersion liquid, for example, according to Japan Patent No. 6051493, and others.

An inverted microscope disclosed by the Japan Patent No. 6051493, and others, includes an immersion-liquid supplying apparatus that continuously supplies or sucks, in a liquid-immersion objective lens, immersion liquid, between a cover glass (or specimen) and an outer lens of an objective lens. This immersion-liquid supplying apparatus includes an immersion-liquid storage tank fixed to a center of rotation part of a rotating revolver, a cap provided on the objective lens, and a connector connecting between the immersion-liquid storage tank and the cap.

With such a configuration, in the inverted microscope disclosed in the Japan Patent No. 6051493, and others, the immersion liquid can always be supplied even during the observation of the specimen, and the objective lens can be easily switched by rotating operation of the rotating revolver.

However, the conventional inverted microscope disclosed in the Japan Patent No. 6051493, and others, has a problem that the immersion-liquid supplying apparatus including the immersion-liquid storage tank is mounted on the rotating revolver, which makes the rotating revolver larger and heavier, and also makes the rotating revolver dedicated to the inverted microscope.

If the rotating revolver is heavier, it may take time to converge vibrations or the like generated when the objective lens moves in an up-down direction, which may lengthen the observation time. If the user of the instrument starts observation without noticing that the vibration has not converged, the observed image may be blurred due to the vibration.

Furthermore, in the conventional configuration disclosed in the publication and others, since the immersion-liquid supplying apparatus is placed at the center of rotation of the rotating revolver, in the case where, for example, the immersion liquid leaks from the immersion-liquid storage tank, the entire microscope may be adversely affected.

An objective of the present disclosure is to provide an inverted microscope that can easily switch between a liquid-immersion objective lens and a dry objective lens with a simple configuration, and that includes an immersion-liquid supplying apparatus capable of easily feeding immersion liquid even during observational use.

### SUMMARY OF THE INVENTION

In order to achieve the above objective, an inverted microscope of one embodiment of the present disclosure includes: a liquid-immersion objective lens; a dry objective lens; a rotating revolver that is capable of mounting the liquid-immersion objective lens and the dry objective lens, and that rotates to switch between the liquid-immersion objective lens and the dry objective lens to place the switched lens in an observation optical path; a support stand that is a fixation section; a focus mechanism that moves the rotating revolver with respect to the support stand, in a direction along an optical axis of the objective lens that is at an observation position; an immersion-liquid feeding base fixed to the support stand; an immersion-liquid feeding section that is movable with respect to the immersion-liquid feeding base in the direction along the optical axis, and that includes an immersion-liquid supply pipe fixed thereto, the immersion-liquid supply pipe supplying immersion liquid to the liquid-immersion objective lens; and a transmission mechanism that mechanically transmits a movement of the focus mechanism in the direction along the optical axis to the immersion-liquid feeding section, when the liquid-immersion objective lens is on the optical axis and is placed within a predetermined range including a position where focus is established on the specimen, and that releases the movement of the focus mechanism in the direction along the optical axis from being transmitted to the immersion-liquid feeding section, when the liquid-immersion objective lens is on the optical axis and is placed in a downward region out of the predetermined range.

According to the present disclosure, it is possible to provide an inverted microscope that can easily switch between a liquid-immersion objective lens and a dry objective lens with a simple configuration, and that includes an immersion-liquid supplying apparatus capable of easily feeding immersion liquid even during observational use.

### BRIEF DESCRIPTION OF THE DRAWINGS

Fig. 1 is a conceptual view showing an outline of an overall configuration of an inverted microscope of one embodiment of the present disclosure.
Fig. 2 is an external schematic perspective view showing an immersion-liquid supplying apparatus in the inverted microscope of the one embodiment of the present disclosure.
Fig. 3 is an external schematic perspective view showing a state where partial constituent elements (an immersion-liquid feeding base and an immersion-liquid feeding unit) of the immersion-liquid supplying apparatus of Fig. 2.
Fig. 4 is an external schematic perspective view of the immersion-liquid supplying apparatus of Fig. 2 viewed in a direction different from that of Fig. 2.
Fig. 5 is a schematic cross-sectional view along a [5]-[5] line in Fig. 4.
Fig. 6 is a schematic cross-sectional view showing a positional relationship between the immersion-liquid supplying apparatus and a specimen container on a stage when the inverted microscope of the present disclosure is in a state for observational use.
Fig. 7 is a main-part enlarged cross-sectional view showing, in an enlarged manner, a part indicated by an arrow sign [7] in Fig. 6.
Fig. 8 is an external schematic perspective view showing only an immersion-liquid discharging unit taken out from the immersion-liquid supplying apparatus of Fig. 2.
Fig. 9 is a main-part exploded perspective view showing the immersion-liquid discharging unit in Fig. 8 in a disassembled manner.
Fig. 10 is an external schematic perspective view showing the immersion-liquid discharging unit when the inverted microscope of the one embodiment of the present disclosure is in a state for observational use and a liquid-immersion objective lens is placed in an observation optical path.
Fig. 11 is a schematic cross-sectional view along an [11]-[11] line in Fig. 10.
Fig. 12 is an external schematic perspective view showing the immersion-liquid discharging unit when the inverted microscope of the one embodiment of the present disclosure is in a state for observational use and the liquid-immersion objective lens is placed at a position out of the observation optical path.
Fig. 13 is a schematic cross-sectional view along a [13]-[13] line in Fig. 12.
Fig. 14 is a schematic view showing, in cross section, a positional relationship between an objective lens and the immersion-liquid supplying apparatus when an up-and-down movable unit is at the lowest end in the inverted microscope of the one embodiment of the present disclosure.
Fig. 15 is a schematic view showing, in cross section, a positional relationship between the objective lens and the immersion-liquid supplying apparatus at a time point when the up-and-down movable unit is raised from the state in Fig. 14 and a revolver support section abuts a contact pin.
Fig. 16 is a schematic view showing, in cross section, a positional relationship between the objective lens and the immersion-liquid supplying apparatus when the liquid-immersion objective lens is in a focus operation range (mid-position) after the state in Fig. 15.
Fig. 17 is a schematic view showing, in cross section, a positional relationship between the objective lens and the immersion-liquid supplying apparatus when the liquid-immersion objective lens is at an upper limit position in the focus operation range after the state in Fig. 16.

### DETAILED DESCRIPTION

Hereinafter, the present disclosure is described by means of the illustrated embodiment. Each drawing used in the following description is shown conceptually. Therefore, in the each drawing, each constituent element is shown at a size to the extent that is recognizable on the drawing. For this purpose, the dimensional relationship, the scale, or the like, of each member on the drawings may be shown differently for each constituent element. The present disclosure is not limited to only the forms shown in the drawings with respect to the respective quantities, respective shapes, respective size ratios, respective relative positional relationships, and others, of respective constituent elements illustrated in each drawing.

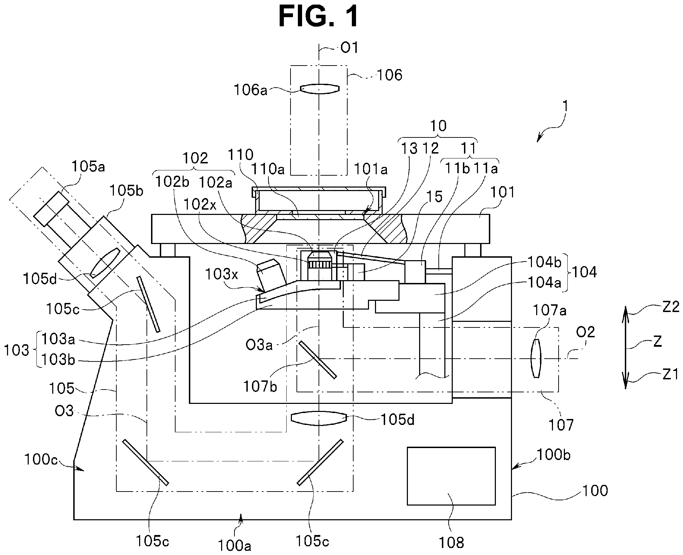

First, an outline of an overall configuration of an inverted microscope of one embodiment of the present disclosure is described below using Fig. 1. Fig. 1 is a conceptual view showing the outline of the overall configuration of the inverted microscope of the present embodiment. Note that, in Fig. 1, a part of a stage 101 is shown in cross-section, and illustration of a part of a focus mechanism 104 is omitted.

As shown in Fig. 1, the inverted microscope 1 of the present embodiment includes a support stand 100, the stage 101, a plurality of objective lenses 102, a rotating revolver 103, the focus mechanism 104, an observation optical system 105, a first illumination optical system 106, a second illumination optical system 107, an electronic parts group 108, an immersion-liquid supplying apparatus 10, a correction-ring remote operation mechanism 15, and the like.

The support stand 100 is a fixation section configuring the main body of the inverted microscope 1. The support stand 100 is mainly configured of a support-stand base section 100a, a support-stand rear section 100b, and a support-stand front section 100c.

Of these, the support-stand base section 100a is a block formed to extend in the front-back direction at the bottom surface of the inverted microscope 1. The support-stand rear section 100b is a wall-like block extending upward from a rear edge section of the support-stand base section 100a. The support-stand front section 100c is a wall-like block extending upward from a front edge section of the support-stand base section 100a. The support stand 100 is generally formed in a substantially concave shape when viewed from the side (see Fig. 1).

The support stand 100 fixedly supports the stage 101. The support stand 100 also holds a movable side of the focus mechanism 104 in a freely movable manner in a predetermined direction (direction along an optical axis O3a of the objective lens 102, described later). Within the support stand 100, the observation optical system 105, the first illumination optical system 106, the second illumination optical system 107, the electronic parts group 108, and the like, are disposed respectively at predetermined positions and in predetermined forms.

The stage 101 is a mounting stand having an upper surface on which a dish 110, which is a specimen container, is to be mounted. The stage 101 includes a board-like member having an upper surface and a lower surface that are flatly formed. The stage 101 is fixedly supported at each upper end of the support-stand rear section 100b and the support-stand front section 100c in a state where the stage 101 is maintained horizontal.

Note that a stage aperture 101a is formed at a substantially center part of the stage 101. The dish 110 is mounted on this stage aperture 101a, and the stage aperture 101a is a through hole to allow observing a specimen (not shown) stored in the dish 110 through a cover glass 110a of the dish 110. That is, the stage aperture 101a is formed to transmit illumination light and observation light when the specimen is observed using the inverted microscope 1. For this purpose, the stage aperture 101a is set to have a size so that the dish 110 does not fall down.

Here, the dish 110 is the specimen container that stores a specimen, which is an observation object. The dish 110 is mounted on the stage 101 when the specimen is observed using the inverted microscope 1. As the dish 110, for example, a general dish is applied in a form where the cover glass 110a is adhered on the bottom surface of a Petri dish.

The focus mechanism 104 is a mechanism section provided to focus the objective lens 102 on the specimen. The focus mechanism 104 is held to be freely movable in a predetermined direction with respect to the support-stand rear section 100b of the support stand 100. Here, the predetermined direction refers to an up-down direction of the inverted microscope 1. In the following description, reference to the up-down direction of the inverted microscope 1 indicates a direction along an optical axis O3a of the objective lens 102, which is a direction along an arrow Z shown in Fig. 1. In this case, an arrow Z1 direction refers to downward and an arrow Z2 direction refers to upward.

The focus mechanism 104 also supports the rotating revolver 103. For this purpose, the focus mechanism 104 is configured to include a focus base section 104a, a revolver support section 104b, an operation member, a driving force transmission mechanism (not shown) that transmits the operation driving force of the operation member, and the like.

Of these, the focus base section 104a is configured to be freely movable in the up-down direction (an optical axis O3a direction) with respect to the support-stand rear section 100b. The revolver support section 104b is formed of a board-like member extending in an orthogonal direction (horizontal direction) with respect to the focus base section 104a. The revolver support section 104b has a proximal end that is fixedly held to the upper end of the focus base section 104a, and has a distal end to which the proximal end of the revolver fixation section 103b of the rotating revolver 103 is fixedly held. The focus base section 104a and the revolver support section 104b are formed using a metal material mainly composed of aluminum (including aluminum alloys), for example, mainly in consideration of points such as weight reduction.

With such a configuration, the focus mechanism 104 transmits the operation driving force of the operation member by the user of the inverted microscope 1, the driving force of a drive motor, or the like, to the focus base section 104a through a predetermined driving force transmission mechanism (such as rack and pinion), to raise and lower the rotating revolver 103 in the up-down direction. Thus, by the rotating revolver 103 being raised and lowered, the objective lens 102 mounted to the rotating revolver 103 moves in a direction along the optical axis O3a. This yields a configuration that the objective lens can be focused on the specimen.

To put it briefly, the focus mechanism 104 moves the objective lens 102, which is placed at a predetermined observation position, in the direction along the optical axis O3a by moving the rotating revolver 103 in the up-down direction with respect to the support stand 100. In this case, the focus mechanism 104 and the rotating revolver 103 function as an up-and-down movable unit that raises and lowers (moves) in the up-down direction. The focus base section 104a is disposed at a position not interfering with the second illumination optical system 107.

Note that the focus mechanism 104 is applied with a well-known configuration in conventional microscopes. Therefore, in the inverted microscope 1 of the present embodiment, the detailed configuration and illustration of the focus mechanism 104 are omitted.

The rotating revolver 103 is configured to hold the plurality of objective lenses 102 having different magnifications or forms, in an interchangeable manner with respect to the specimen, and also to be raised and lowered in the up-down direction together with the focus mechanism 104. The rotating revolver 103 includes a revolver movable section 103a and the revolver fixation section 103b.

Of these, the revolver movable section 103a is a movable member having a shape of a disk, which is configured to be capable of mounting the plurality of objective lenses 102. The revolver movable section 103a is disposed to be freely rotatable at a predetermined region near the distal end of the revolver fixation section 103b.

Here, the revolver movable section 103a has a configuration to rotate around a predetermined rotation axis, to thereby place one objective lens of the mounted plurality of objective lenses 102 at a predetermined position on an optical path O3 of the observation optical system 105. The predetermined position in this case is a position where the optical axis O3a of the objective lens 102 coincides with a part of the optical path O3 of the observation optical system 105.

In other words, the rotating revolver 103 has a function to rotate to switch between the plurality of objective lenses 102 (a liquid-immersion objective lens 102a and a dry objective lens 102b; see below for details) to place the switched lens on the optical axis O3a.

Note that the region where the objective lens 102 is mounted in the revolver movable section 103a is applied with, for example, a female thread of the so-called RMS standard defined by the Japan Industrial Standard JIS B 7141 (2012), the International Standard ISO 8038 (2013) of the International Organization for Standardization, or other standards. Correspondingly, a similar RMS standard male thread is applied to an attaching section of the objective lens 102.

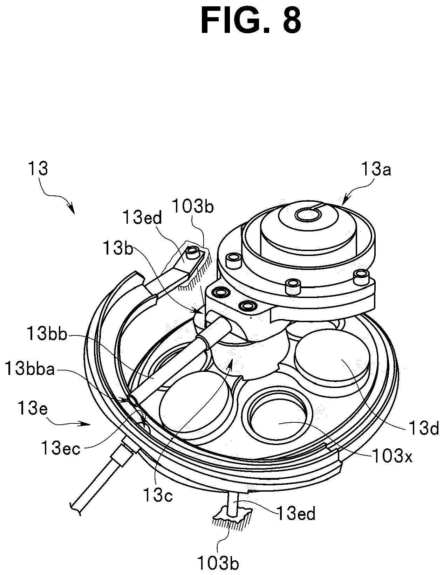

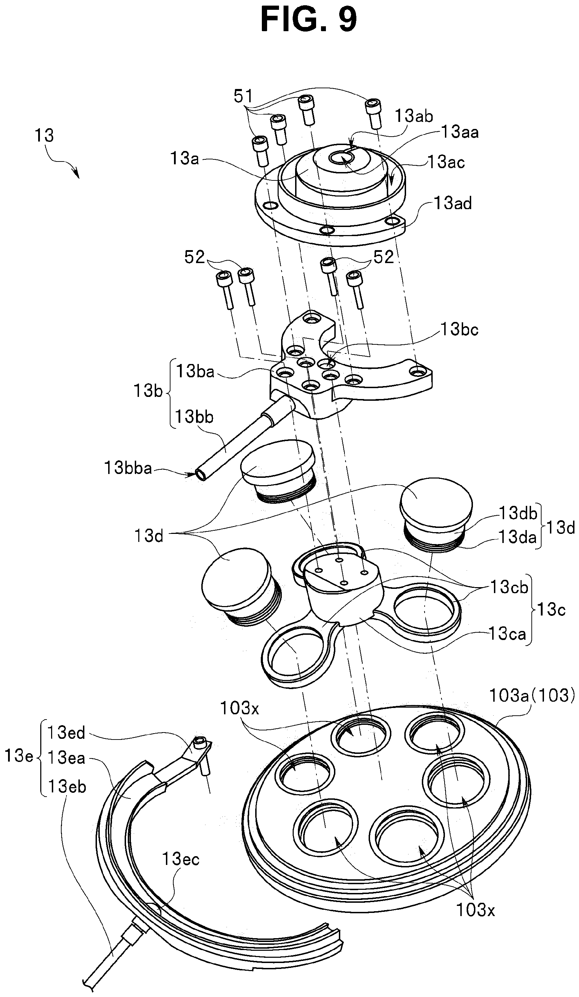

Accordingly, in the following description, the mounting region of the objective lens 102 in a revolver movable section 103b is referred to as an RMS section (see the sign 103x in Fig. 8 and Fig. 9 described later). That is, the RMS section 103x is formed by a threaded hole having a female thread that engages with a male thread of the RMS standard on the objective lens side.

Note that the rotating revolver 103 applied in the inverted microscope 1 of the present embodiment is shown to have an example of having a configuration with six RMS sections 103x, to be capable of mounting, for example, six objective lenses 102, as shown in Fig. 9 or other figures.

The plurality of objective lenses 102 mounted to the rotating revolver 103 include, for example, the liquid-immersion objective lens 102a and the dry objective lens 102b. Here, it is assumed that the liquid-immersion objective lens 102a is mainly a high-magnification objective lens, and the dry objective lens 102b is a low-magnification objective lens. In other words, the rotating revolver 103 can mount the liquid-immersion objective lens 102a and the dry objective lens 102b.

The revolver fixation section 103b has a proximal end that is fixedly held to the distal end of the revolver support section 104b of the focus mechanism 104. With this configuration, the rotating revolver 103 is configured to be able to be raised and lowered in the up-down direction (optical axis O3a direction) by the focus mechanism 104. This provides for a configuration that, by the rotating revolver 103 raising and lowering in the up-down direction (optical axis O3a direction), focus of the objective lens 102 can be established on the specimen.

Note that the configuration of the rotating revolver 103 itself is similar to well-known configurations applied in conventional microscopes. Therefore, in the present embodiment, more detailed configuration and illustration of the rotating revolver 103 are omitted.

The observation optical system 105 is an optical unit that forms an optical image of a specimen (not shown) in the dish 110 mounted on the stage 101 to observe the formed optical image. The observation optical system 105 is configured to include an eyepiece 105a, a lens barrel 105b, a plurality of mirrors 105c, a plurality of image formation lenses 105d, and the like.

Of these, the eyepiece 105a is an optical lens for observing the optical image of the specimen. The lens barrel 105b is a cylindrical member in which to orderly arrange and to be attached with the eyepiece 105a and the plurality of image formation lenses 105d on an observation optical path O3 in the direction along the optical path O3. The plurality of mirrors 105c are optical path bending members that are disposed in plurality at predetermined positions on the observation optical path O3, and that reflect light flux from the specimen to thereby bend the observation optical path O3, to guide the light flux from the specimen on the stage 101 to the eyepiece 105a. The plurality of image formation lenses 105d are a group of optical lenses that form an optical image of the specimen at a predetermined focal position.

The first illumination optical system 106 is an optical unit that guides illumination light from a light source apparatus (not shown) to the specimen along a first illumination optical path O1, to thereby illuminate the specimen with the guided illumination light as transmitted illumination light. The first illumination optical system 106 is configured of, for example, a condensing lens 106a, as well as an aperture diaphragm, a field of view diaphragm, a condenser lens, and the like, which are not shown. Of these, the condensing lens 106a is an optical member that condenses the light flux from the light source apparatus.

The second illumination optical system 107 is an optical unit that guides illumination light from a light source apparatus (not shown) to the specimen along a second illumination optical path O2, to thereby illuminate the specimen with the guided illumination light as epi-illumination light. The second illumination optical system 107 is configured of a condensing lens 107a and a dichroic mirror 107b, as well as an aperture diaphragm, a field of view diaphragm, a condenser lens, and the like, which are not shown.

Of these, the condensing lens 107a is an optical member that condenses the light flux from the light source apparatus. The dichroic mirror 107b is an optical member that reflects the light flux from the light source apparatus toward the specimen along the second illumination optical path O2, and transmits the light whose light flux was reflected by the specimen, thus guiding the transmitted light to the observation optical path O3 of the observation optical system 105.

Note that the first illumination optical system 106 and the second illumination optical system 107 are substantially similar to the ones applied in microscopes of conventional general configuration. Therefore, in the present embodiment, more detailed configuration and illustration of the first illumination optical system 106 and the second illumination optical system 107 are omitted.

In Fig. 1, although illustration is omitted, a light source apparatus is connected to each of the first illumination optical system 106 and the second illumination optical system 107. These light source apparatuses are disposed fixedly on the support stand 100.

The electronic parts group 108 is an electrical constituent section including an electrical substrate mounted with a control circuit and the like that control an entirety of the inverted microscope 1, a power supply, and the like. The electronic parts group 108 includes a drive motor for driving the raising and lowering of the focus mechanism 104 and a drive control circuit of the drive motor, a drive motor for driving the rotation of the rotating revolver 103 and a drive control circuit of the drive motor, and the like. Furthermore, the electronic parts group 108 also includes a liquid supply pump that drives the immersion-liquid supplying apparatus 10 to be described later, a drainage pump, or a drive motor that drives the correction-ring remote operation mechanism 15 that acts on a correction ring 102x of the liquid-immersion objective lens 102a, as well as their drive control circuits, and the like. Note that the liquid supply pump and the drainage pump may be controlled not by the electronic parts group 108, but by a control apparatus placed outside the inverted microscope 1. The correction-ring remote operation mechanism 15 may be remotely operated manually, rather than be operated by the drive motor. Because the present embodiment employs a configuration of attaching the immersion-liquid supplying apparatus 10, the space for the user of the instrument to directly access the correction ring is narrow. For this reason, if the correction ring is remotely operated manually or operated motor-driven, a significant effect in improvement in operability can be achieved.

The electronic parts group 108 is disposed within the support stand 100, as described above. Note that the detailed configuration and illustration of the electronic parts group 108, which is a part not directly related to the present disclosure, are omitted, assuming that the group is substantially the same as the one in a microscope of a conventional general configuration.

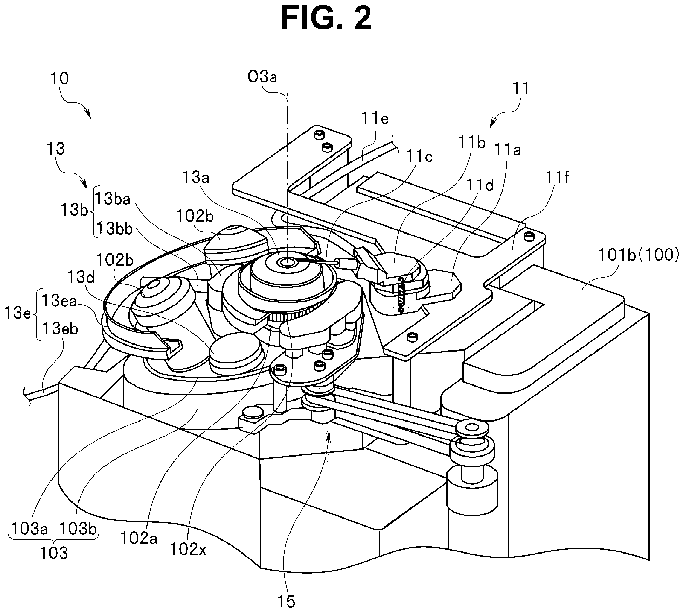

Next, the detailed configuration of the immersion-liquid supplying apparatus 10 in the inverted microscope 1 of the present embodiment is described below using Fig. 2 to Fig. 11. Note that here, the immersion-liquid supplying apparatus 10 is an apparatus mounted to the rotating revolver 103, to supply immersion liquid to the liquid-immersion objective lens 102a placed in the observation optical path.

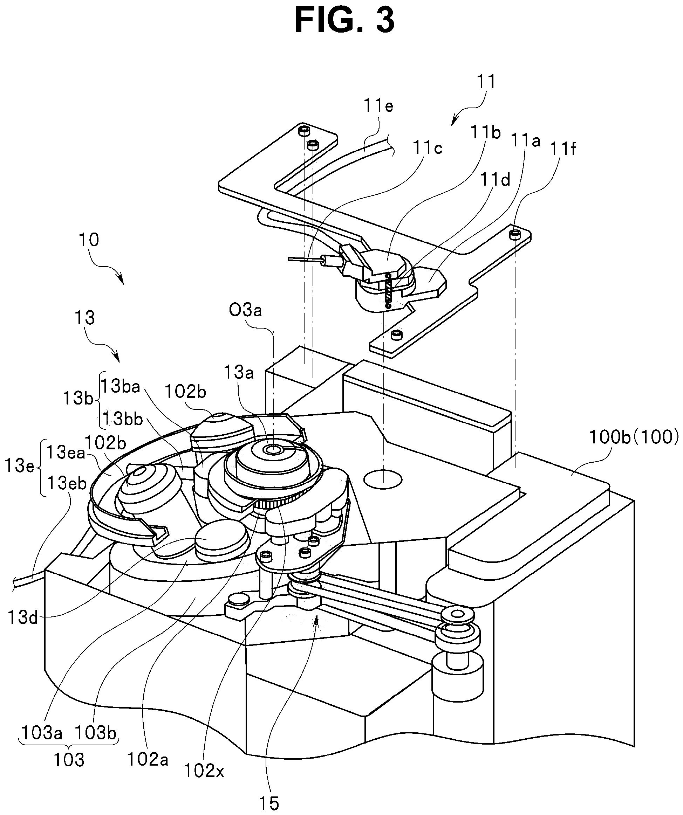

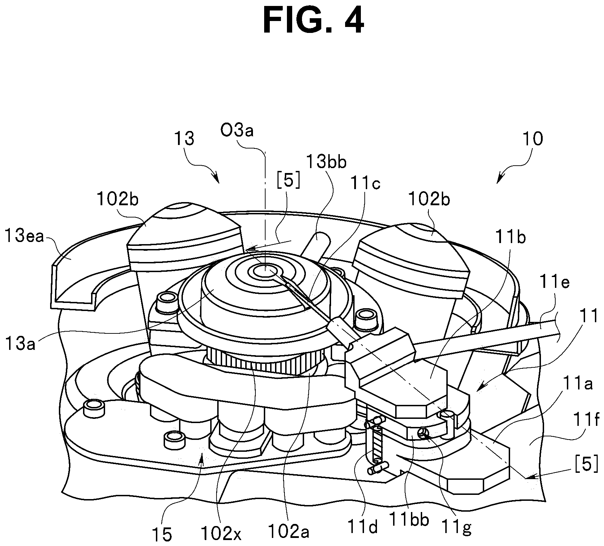

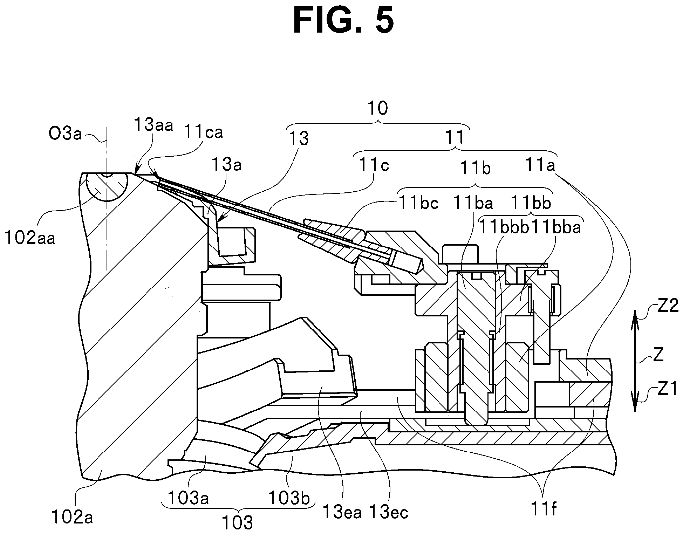

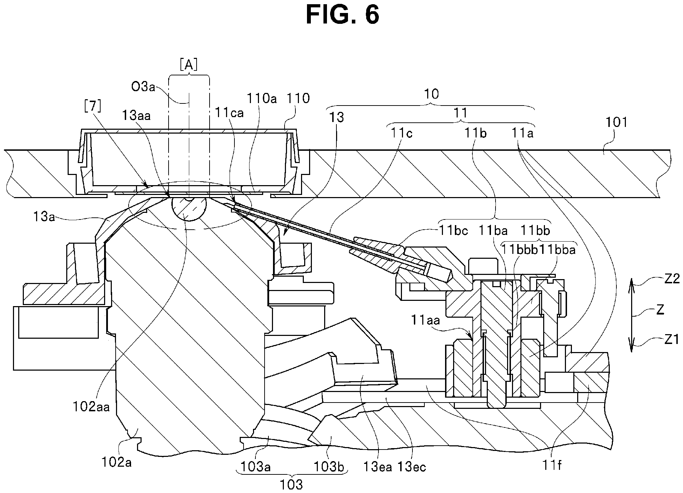

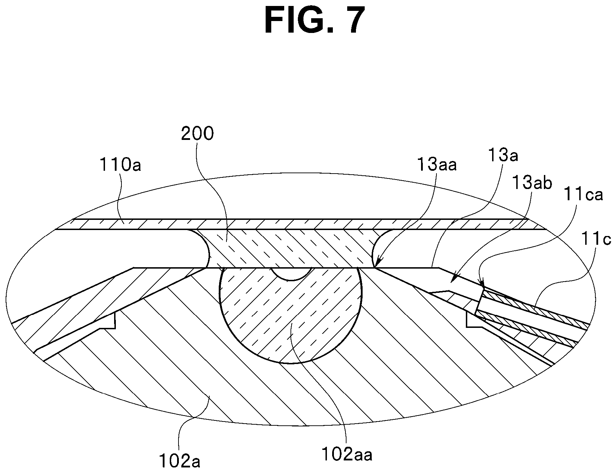

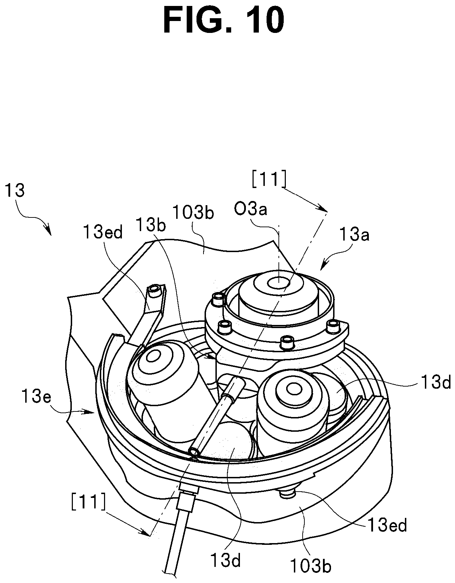

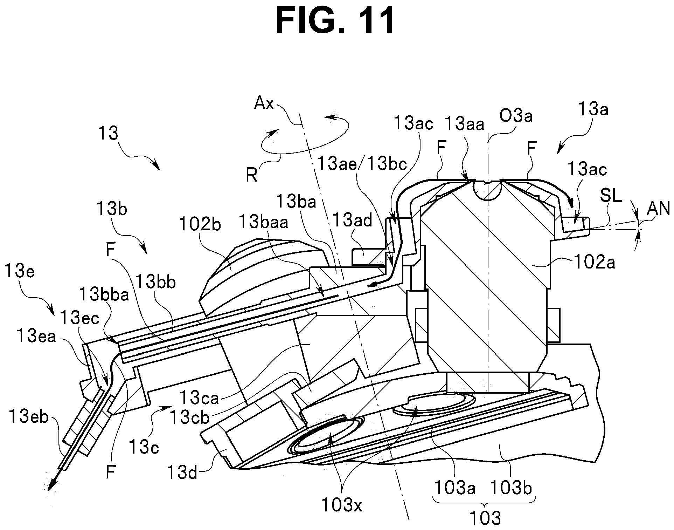

Fig. 2 is an external schematic perspective view showing the immersion-liquid supplying apparatus. Fig. 3 is an external schematic perspective view showing a state where partial constituent elements (an immersion-liquid feeding base and an immersion-liquid feeding unit) of the immersion-liquid supplying apparatus of Fig. 2 are detached. Fig. 4 is an external schematic perspective view of the immersion-liquid supplying apparatus of Fig. 2 viewed in a direction different from that of Fig. 2. Fig. 5 is a schematic cross-sectional view along a [5]-[5] line in Fig. 4. Fig. 6 is a schematic cross-sectional view showing a positional relationship between the immersion-liquid supplying apparatus and the specimen container on the stage when the inverted microscope is in a state for observational use. Here, Fig. 6 is a cross-section corresponding to the cross-section of the [5]-[5] line in Fig. 4. Fig. 7 is a main-part enlarged cross-sectional view showing, in an enlarged manner, a part indicated by the arrow sign [7] in Fig. 6. Fig. 8 is an external schematic perspective view showing only an immersion-liquid discharging unit taken out from the immersion-liquid supplying apparatus. Fig. 9 is a main-part exploded perspective view showing the immersion-liquid discharging unit in Fig. 8 in a disassembled manner. Fig. 10 is an external schematic perspective view showing the immersion-liquid discharging unit when the inverted microscope is in a state for observational use and the liquid-immersion objective lens is placed in an observation optical path. Fig. 11 is a schematic cross-sectional view along an [11]-[11] line in Fig. 10.

As shown in Fig. 2 or other figures, the immersion-liquid supplying apparatus 10 includes an immersion-liquid feeding unit 11, an immersion-liquid discharging unit 13, and the like.

The immersion-liquid feeding unit 11 is a constituent unit having a configuration to supply (feed) predetermined immersion liquid to the liquid-immersion objective lens 102a placed at the predetermined observation position.

The immersion-liquid feeding unit 11 includes an immersion-liquid feeding base 11a, an immersion-liquid feeding section 11b, an immersion-liquid supply pipe 11c, a biasing spring 11d, an immersion liquid feeding tube 11e, an immersion-liquid feeding section fixing plate 11f, and the like.

Of these, the immersion-liquid feeding base 11a is a foundation member in the immersion-liquid feeding unit 11. The immersion-liquid feeding base 11a is fixed to the support stand 100 through the immersion-liquid feeding section fixing plate 11f. Here, the immersion-liquid feeding base 11a is placed at a predetermined position in the vicinity of an outer circumference edge section of the revolver movable section 103a of the rotating revolver 103.

The immersion-liquid feeding section 11b is configured to freely movable up and down with respect to the immersion-liquid feeding base 11a in the direction along the optical axis O3a. The immersion-liquid feeding section 11b includes a contact pin 11ba, a positioning member 11bb, and a pipe holding section 11bc, as shown in Fig. 6 or other figures. The contact pin 11ba, the positioning member 11bb, and the pipe holding section 11bc are integrally formed.

Here, the contact pin 11ba is a member configuring a part of a transmission mechanism that transmits the raising and lowering of the focus mechanism 104 to the immersion-liquid feeding section 11b, or releases the transmission.

That is, the contact pin 11ba is abutted and pressed by a predetermined region on the upper surface side of the revolver support section 104b or of the revolver fixation section 103b at a predetermined timing when the focus mechanism 104 is raised and lowered. As a result, the raising and lowering movement of the focus mechanism 104 is transmitted to the immersion-liquid feeding section 11b.

The contact pin 11ba is released from the abutment with the predetermined region on the upper surface side of the revolver support section 104b or of the revolver fixation section 103b at a predetermined timing when the focus mechanism 104 is raised or lowered. As a result, the transmission of the raising and lowering movement of the focus mechanism 104 to the immersion-liquid feeding section 11b is released.

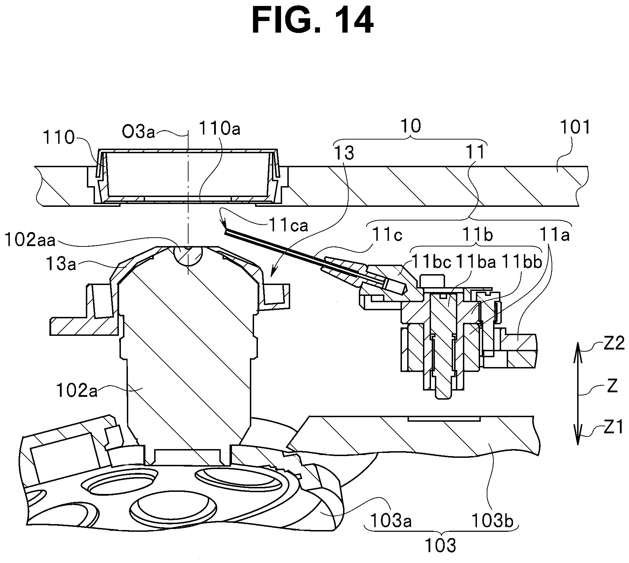

The positioning member 11bb is a constituent member that positions the immersion-liquid feeding section 11b to a predetermined position, in a state where the raising and lowering movement of the focus mechanism 104 by the contact pin 11ba is released from being transmitted to the immersion-liquid feeding section 11b (see Fig. 14 described later).

The positioning member 11bb is formed including a flange section 11bba and a hollow shaft section 11bbb, as shown in Fig. 6 or other figures. The contact pin 11ba is inserted into and fixed to the hollow shaft section 11bbb. At this time, the distal end of the contact pin 11ba protrudes downward by a predetermined amount from the distal end of the hollow shaft section 11bbb. The hollow shaft section 11bbb is slidably inserted into a through hole 11aa (see Fig. 6) of the immersion-liquid feeding base 11a.

Note that here, one region (the through hole 11aa) of the immersion-liquid feeding base 11a configures a part of the transmission mechanism that transmits the raising and lowering of the focus mechanism 104 to the immersion-liquid feeding section 11b, or releases the transmission.

In this case, the flange section 11bba abuts the upper surface of the immersion-liquid feeding base 11a, thereby positioning the positioning member 11bb in the arrow Z1 direction (see Fig. 14 described later).

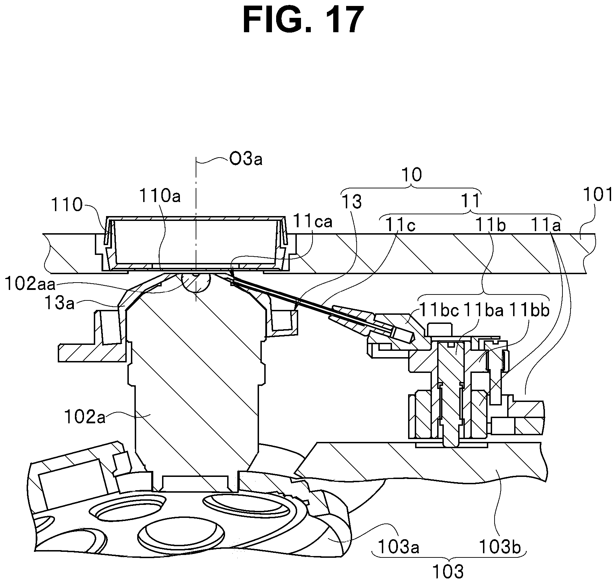

Note that Fig. 6 shows a state in which the revolver fixation section 103b is raised in the arrow Z2 direction by the raising and lowering action of the focus mechanism 104, and a part of the upper surface of the revolver support section 104b or of the revolver fixation section 103b abuts the lower end surface of the contact pin 11ba, pushing up the immersion-liquid feeding section 11b by a predetermined movement amount in the arrow Z2 direction (substantially the same state as in Fig. 17 described later).

The pipe holding section 11bc is a constituent member that holds the immersion-liquid supply pipe 11c in a predetermined form. The pipe holding section 11bc is fixed in a form of being mounted on one region on the upper surface side of the flange section 11bba of the positioning member 11bb, as shown in Fig. 5, Fig. 6, or other figures.

Here, the immersion-liquid feeding section 11b, including the immersion-liquid supply pipe 11c held in the pipe holding section 11bc, is movable in the optical axis O3a direction with respect to the immersion-liquid feeding base 11a fixed to the support stand 100.

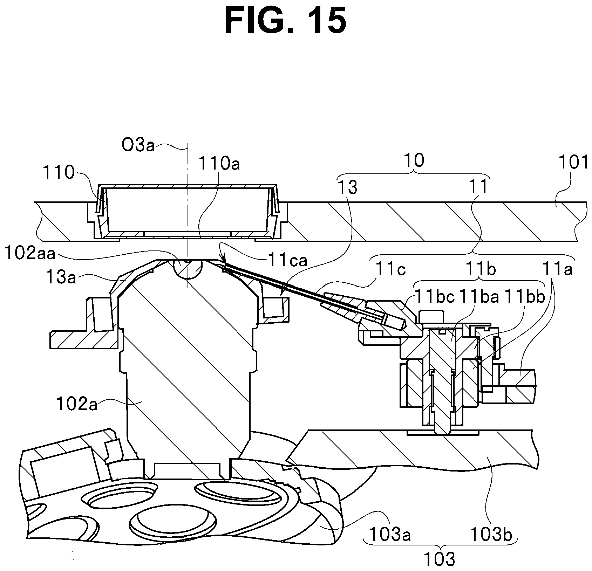

In this case, the pipe holding section 11bc holds the immersion-liquid supply pipe 11c such that the distal end of the immersion-liquid supply pipe 11c faces the side of the revolver movable section 103a of the rotating revolver 103.
Furthermore, the pipe holding section 11bc holds the immersion-liquid supply pipe 11c such that a pipe distal end 11ca of the immersion-liquid supply pipe 11c is placed in the vicinity of a distal end lens 102aa (see Fig. 5 to Fig. 7) of the liquid-immersion objective lens 102a (see also Fig. 15 to Fig.17 described later) when the liquid-immersion objective lens 102a is placed at the predetermined observation position.

The immersion-liquid supply pipe 11c is a nozzle that emits immersion liquid toward the vicinity of the distal end surface of the distal end lens 102aa of the liquid-immersion objective lens 102a placed at the observation position, and supplies immersion liquid 200 between the distal end lens 102aa and the cover glass 110a (see Fig. 7). The pipe distal end 11ca of the immersion-liquid supply pipe 11c is held to be placed in the vicinity of the distal end lens 102aa when the liquid-immersion objective lens 102a is placed at the observation position, as described above. Note that in this case, the position (especially the position in the horizontal direction) of the pipe distal end 11ca of the immersion-liquid supply pipe 11c is placed at a position outside of a light beam passage region (region indicated by the sign [A] in Fig. 6) of the objective lenses (102a, 102b) placed at the observation position.

Note that the position adjustment of the immersion-liquid feeding section 11b in the Z direction is performed by moving the contact pin 11ba in the Z direction. For this purpose, a slit-like groove (slit section) is provided on the upper end surface of the contact pin 11ba. When the contact pin 11ba is rotated using this slit-like groove, the contact pin 11ba moves in the Z direction by the so-called "feed-out and feed-in" actions of a screw. The contact pin 11ba that has been position-adjusted in the Z direction is restricted from moving in the Z direction, by a lock set screw 11g (see Fig. 4) provided in the positioning member 11bb, thus maintaining the predetermined adjustment position.

In a normal case, when the objective lens 102 is placed at the predetermined observation position, the distal end position of the objective lens 102 in the Z direction may vary depending on the type or form of the objective lens. The distal end position also varies depending on variations in the machining and variations in the assembly of the focus mechanism 104 and the rotating revolver 103. To address this issue, the position of the immersion-liquid feeding section 11b in the Z direction is adjusted using the contact pin 11ba, as described above. As a result, it is so configured that the position in the Z direction of the pipe distal end 11ca of the immersion-liquid supply pipe 11c attached to the immersion-liquid feeding section 11b can be adjusted according to the distal end position of the objective lens 102. By providing such a position adjustment mechanism, it can be adjusted so that the immersion liquid emitted from the pipe distal end 11ca of the immersion-liquid supply pipe 11c is accurately emitted toward the distal end of the liquid-immersion objective lens 102a placed at the predetermined observation position.

The biasing spring 11d is a constituent member that maintains the position of the immersion-liquid feeding section 11b relative to the immersion-liquid feeding base 11a at a predetermined position. The biasing spring 11d is placed over between the immersion-liquid feeding base 11a and the immersion-liquid feeding section 11b. A taut coil spring or the like is applied as the biasing spring 11d.

With this configuration, the biasing spring 11d constantly biases the immersion-liquid feeding section 11b (movable member) toward the immersion-liquid feeding base 11a (fixation member), thus maintaining the abutment state between the flange section 11bba and the upper surface of the immersion-liquid feeding base 11a. This positions the immersion-liquid feeding section 11b at the predetermined position.

As shown in Fig. 6, when the revolver support section 104b or the revolver fixation section 103b is raised in the arrow Z2 direction by the raising and lowering action of the focus mechanism 104, the upper surface of the revolver support section 104b or the revolver fixation section 103b abuts the lower end surface of contact pin 11ba, and an amount of force in the arrow Z2 direction is applied to the immersion-liquid feeding section 11b, the immersion-liquid feeding section 11b is pushed up in the Z2 direction against the biasing force of the biasing spring 11d.

The immersion liquid feeding tube 11e is an immersion-liquid distribution pipe connected to an immersion-liquid storage tank and a liquid supply pump, which are not shown, to supply immersion liquid from the tank to the immersion-liquid feeding section 11b.

The immersion-liquid feeding section fixing plate 11f is fixed to the support stand 100 (the upper surface of the support-stand rear section 100b). On this immersion-liquid feeding section fixing plate 11f, the immersion-liquid feeding base 11a is mounted and fixed, as described above. Thus, the immersion-liquid feeding base 11a is fixed to the support stand 100 through the immersion-liquid feeding section fixing plate 11f.

The transmission mechanism is a mechanism unit that transmits the raising and lowering of the focus mechanism 104 to the immersion-liquid feeding section 11b, or releases the transmission. In the present embodiment, the transmission mechanism is configured of, for example, the contact pin 11ba and the through hole 11aa of the immersion-liquid feeding base 11a.

The transmission mechanism mechanically transmits the up-and-down movement of the focus mechanism 104 in the direction along the optical axis O3a to the immersion-liquid feeding section 11b, to move the immersion-liquid feeding section 11b in the same direction in tandem with the movement of the focus mechanism 104, when, for example, the liquid-immersion objective lens 102a is on the optical axis O3a and is placed within a predetermined range including a position where focus is established on the specimen (referred to as a focus operation range).

The transmission mechanism also releases the movement of the focus mechanism 104 in the direction along the optical axis O3a from being transmitted to the immersion-liquid feeding section 11b, when, for example, the liquid-immersion objective lens 102a is on the optical axis O3a and is placed in a downward region out of the predetermined range in the Z direction (region from the position in the initial observation state to the position immediately before entrance to the focus operation range). Note that the focus operation range is determined by taking into consideration the variation in the distance from the lowest surface of the specimen container (the surface in contact with the stage) to the upper surface of the cover glass, and the range of the distance of the observation surface of the specimen actually desired to be observed to the lowest surface of the specimen container (usually a specimen on the upper surface of the cover glass is observed, but in some cases the inside of the specimen in a thickness direction is observed).

When the movable-side members (the revolver support section 104b and the revolver fixation section 103b) of the focus mechanism 104 reach a predetermined position in the Z direction, the movable-side members contact the contact pin 11ba of the immersion-liquid feeding section 11b to press the contact pin 11ba. As a result, the transmission mechanism moves the immersion-liquid feeding section 11b in the optical axis O3a direction (Z2 direction).

The immersion-liquid discharging unit 13 is a constituent unit that collects the immersion liquid which is supplied from the immersion-liquid feeding unit 11 and is discharged from the distal end of the liquid-immersion objective lens 102a. As shown in Fig. 8, Fig. 9, or other figures, this immersion-liquid discharging unit 13 includes an objective cap 13a that is a ring-shaped member, a flow-path-section assembly 13b, an immersion-liquid-discharging-unit attachment member 13c, a fixation lid 13d, an immersion-liquid-reception-section assembly 13e, and the like (see mainly Fig. 9 or other figures).

Of these, the objective cap 13a is a ring-shaped member that is provided at the distal end of the liquid-immersion objective lens 102a, and that guides (see the sign F in Fig. 11) the immersion liquid discharged in a radial direction from the distal end of the liquid-immersion objective lens 102a to a pipe-shaped member (a drainage pipe 13bb) of the flow-path-section assembly 13b.

The objective cap 13a includes a cap through hole 13aa, a cap groove 13ab, a drainage groove 13ac, and a coupling flange 13ad.

Of these, the cap through hole 13aa is a through hole that allows passage of the light flux passing through the liquid-immersion objective lens 102a mounted with the objective cap 13a. The cap through hole 13aa is formed at a position where the optical axis O3a of the liquid-immersion objective lens 102a passes through the center of the cap through hole 13aa, when the liquid-immersion objective lens 102a mounted with the objective cap 13a is placed at the observation position. For this reason, in a state where the objective cap 13a is mounted to the liquid-immersion objective lens 102a, the distal end lens 102aa is exposed through the cap through hole 13aa (see Figs. 5 to 7).

The cap groove 13ab is a groove in which a partial region of the distal end of the immersion-liquid supply pipe 11c is placed when the immersion-liquid supplying apparatus 10 is placed at a predetermined position. Here, a predetermined state of the immersion-liquid supplying apparatus 10 assumes, for example, a state in which the liquid-immersion objective lens 102a mounted with the objective cap 13a is placed at the observation position in the inverted microscope 1, and the liquid-immersion objective lens 102a is placed within a predetermined range including a position where focus is established on the specimen by the liquid-immersion objective lens 102a (see Figs. 5 to 7 and also Figs. 15 to 17 described later). Note that it is desirable to adjust the attachment position of the liquid-immersion feeding base 11a with respect to the support stand 100 so that the distal end of the immersion-liquid supply pipe 11c and the cap groove 13ab are aligned with each other in a horizontal plane.

The liquid drainage groove 13ac includes a circumferential groove formed around an outer circumference edge section of the objective cap 13a. The drainage groove 13ac is a reception groove that receives the immersion liquid discharged in the radial direction from the distal end of the liquid-immersion objective lens 102a. The drainage groove 13ac is formed to guide the received immersion liquid in a predetermined direction (see the sign F in Fig. 11). Here, the predetermined direction is a direction in which the drainage pipe 13bb, which is the pipe-shaped member of the flow-path-section assembly 13b, is installed.

For this purpose, the drainage groove 13ac is formed to have a slant SL having a predetermined angle AN in cross section, as shown in Fig. 11 or other figures. In this case, the slant SL of the drainage groove 13ac is set to form an inclination in which a position where the drainage pipe 13bb is installed is on a downstream side, when the liquid-immersion objective lens 102a mounted with the objective cap 13a is placed at the observation position. Here, the drainage groove 13ac has a perforation hole 13ae (see Fig. 11) formed in a bottom surface region facing the position where the drainage pipe 13bb is installed.

The coupling flange 13ad is an attachment region for coupling the objective cap 13a to the flow-path-section assembly 13b. A plurality of screw holes are formed in the coupling flange 13 ad. A bolt 51 is inserted into each of these plurality of screw holes. A threaded section of the bolt 51 engages with the threaded hole of the flow-path-section assembly 13b. As a result, the objective cap 13a is assembled integrally with the flow-path-section assembly 13b.

Note that, although the illustration is omitted, a sealing member of a predetermined form (such as, for example, an O ring) is disposed on an inner periphery part of the cap through hole 13aa of the objective cap 13a. This sealing member is a closing member for closing the space between the objective cap 13a and the outer surface of the lens barrel of the liquid-immersion objective lens 102 when the objective cap 13a is mounted to the distal end of the liquid-immersion objective lens 102. By providing this sealing member, entrance of the immersion liquid from the cap through hole 13aa into the interior of the objective cap 13a is restrained. Thus, this restrains the immersion liquid entering the interior of the objective cap 13a from running along, for example, the outer surface of the lens barrel of the liquid-immersion objective lens 102a, and eroding various constituent members below, or the like (such as, for example, the RMS sections 103x of the rotating revolver 103).

The flow-path-section assembly 13b is a constituent member that receives the immersion liquid (see the sign F in Fig. 11) that is discharged from the distal end of the liquid-immersion objective lens 102a and is guided by the objective cap 13a, and further guides the received immersion liquid through the drainage pipe 13bb to a dish member 13ea (described later) fixed on the outer circumference side of the rotating revolver 103 (see the sign F in Fig. 11).

The flow-path-section assembly 13b includes a coupling member 13ba and a drainage pipe 13bb that is a pipe-shaped member. Of these, the coupling member 13ba is a constituent member coupled to the objective cap 13a. The coupling member 13ba includes a flow path 13baa (see Fig. 11) inside thereof.

The flow path 13baa has one end section on the upper surface side, at which an aperture 13bc (see Figs. 9 and 11) is formed, and another internal end to which the proximal end of the pipe-shaped member (the drainage pipe 13bb) is connected. The aperture 13bc at the one end section on the upper surface side is connected to the perforation hole 13ae (see Fig. 11) of the objective cap 13a.

The drainage pipe 13bb is a pipe-shaped member that guides the discharged immersion liquid (see the sign F in Fig. 11), which is guided from the perforation hole 13ae of the objective cap 13a via the aperture 13bc to the flow path 13baa, to the dish member 13ea (described later). The proximal end of the drainage pipe 13bb is connected to the other end of the flow path 13baa of the coupling member 13ba. The drainage pipe 13bb is provided to protrude outwardly from the coupling member 13ba. In this case, a distal-end discharge port 13bba of the drainage pipe 13bb is placed in the vicinity of the outer circumference edge section of the liquid-immersion objective lens 102a.

Note that here, the drainage pipe 13bb is disposed to the coupling member 13ba to have a slant such that the other end side (the side of the distal-end discharge port 13bba) is positioned to be lower than the proximal end side in the Z direction (up-down direction).

The drainage pipe 13bb is placed at a position where the distal-end discharge port 13bba faces the dish member 13ea, which will be described later, when viewed in the up-down direction. As a result, the distal-end discharge port 13bba of the drainage pipe 13bb is placed to overlap a flat portion of the dish member 13ea when viewed in the Z direction. Note that, at this time, the positional relationship in the Z direction is such that the distal-end discharge port 13bba is placed above the dish member 13ea.

With such a configuration, the immersion liquid discharged in the radial direction from the distal end of the liquid-immersion objective lens 102a flows along the arrow F shown in Fig. 11, is thereby guided to the drainage pipe 13bb, and is further guided to the dish member 13ea and a drainage tube 13eb of the immersion-liquid-reception-section assembly 13e. The discharged immersion liquid is finally discharged into a drainage tank (not shown). Thus, in the immersion-liquid discharging unit 13, a flow path section through which the discharged immersion liquid flows is formed by the objective cap 13a and the flow-path-section assembly 13b.

Note that the flow-path-section assembly 13b is fixed to the revolver movable section 103a of the rotating revolver 103 by using the RMS section 103x on which neither of the liquid-immersion objective lens 102a and the dry objective lens 102b is mounted, of the plurality of (six in the present embodiment) RMS sections 103x provided to the revolver movable section 103a of the rotating revolver 103.

For this purpose, the immersion-liquid discharging unit 13 includes the immersion-liquid-discharging-unit attachment member 13c and the fixation lid 13d. Of these, the immersion-liquid-discharging-unit attachment member 13c is a constituent member disposed between the flow-path-section assembly 13b and the revolver movable section 103a.

The immersion-liquid-discharging-unit attachment member 13c is formed to include a main body section 13ca and a plurality of arm sections 13cb. The main body section 13ca is formed in a substantially cylindrical shape, and has an upper surface side on which the flow-path-section assembly 13b is fixed by a plurality of bolts 52. The lower side of the main body section 13ca is placed in a substantially center region of the revolver movable section 103a.

The plurality of arm sections 13cb are formed with the proximal end extending from a side surface near the lower end of the main body section 13ca. The plurality of arm sections 13cb each include, at the distal end, a circular ring having a hole section formed in a form corresponding to the RMS section 103x of the revolver movable section 103a. An inner diameter of the circular ring is set to a diameter that substantially coincides with or slightly larger than an inner diameter of the RMS section 103x. Note that, in this configuration example of the present embodiment, a configuration with three arm sections 13cb is shown. These three arm sections 13cb are formed in a form arranged alternately to the six RMS sections 103x formed in the revolver movable section 103a (see Fig. 9 or other figures).

The fixation lid 13d includes a male thread section 13da that engages with a female thread of the RMS section 103x, and a lid section 13db that closes the hole section of the RMS section 103x (see Fig. 9).

Then, with the each circular ring of the three arm sections 13cb of the immersion-liquid-discharging-unit attachment member 13c addressed to three RMS sections 103x of the six RMS sections 103x of the revolver movable section 103a, the each male thread section 13da of the fixation lid 13d is inserted into the circular ring of each arm section 13cb, and then the each male thread section 13da is caused to engage with the each female thread of the each corresponding RMS section 103x. As a result, the immersion-liquid-discharging-unit attachment member 13c is fixed to the revolver movable section 103a. The flow-path-section assembly 13b is fixed to the immersion-liquid-discharging-unit attachment member 13c using the plurality of bolts 52. The objective cap 13a is fixed to the flow-path-section assembly 13b using a plurality of bolts 51.

In this way, the objective cap 13a, the flow-path-section assembly 13b, and the immersion-liquid-discharging-unit attachment member 13c of the immersion-liquid discharging unit 13 are integrated, and fixed to the revolver movable section 103a. Thus, the constituent unit, in which the objective cap 13a, the flow-path-section assembly 13b, and the immersion-liquid-discharging-unit attachment member 13c are integrated, rotates together with the revolver movable section 103a when the revolver movable section 103a is rotated to switch the objective lens 102.

At this time, the drainage pipe 13bb provided in the flow-path-section assembly 13b of the immersion-liquid discharging unit 13 also moves together according to the rotation of the revolver movable section 103a.

The immersion-liquid-reception-section assembly 13e is a constituent section that receives the immersion liquid discharged from the drainage pipe 13bb and finally discharges the received immersion liquid to the drainage tank, not shown. The immersion-liquid-reception-section assembly 13e includes the dish member 13ea, the drainage tube 13eb, and a dish fixation member 13ed. Of these, the dish member 13ea has a substantially semicircular shape as a whole, and is formed with a peripheral groove with a substantially concave shape in cross section. Here, the shape of the dish member 13ea may be a substantially circular ring shape.
However, because various constituent members are placed peripheral to the rotating revolver 103, as measures to avoid interference with those constituent members, the dish member 13ea has a substantially semicircular shape as an example configuration in the present embodiment. Specifically, the dish member 13ea may have a substantially semicircular shape having a center angle that is "equal to or greater than 180 degrees".

The dish member 13ea is placed at a position to surround a part of the outer circumference of the revolver movable section 103a. In this case, the bottom surface of the peripheral groove of the dish member 13ea and the distal-end discharge port 13bba of the drainage pipe 13bb are placed to overlap each other when viewed in the Z direction, with the distal-end discharge port 13bba being on the upper side, as described above.

The dish member 13ea is placed inclined with respect to the optical axis O3a. In this case, the inclination of the dish member 13ea may be set at an inclination substantially equivalent to that of the drainage pipe 13bb. With such a configuration, the dish member 13ea is configured to collect the immersion liquid from the drainage pipe 13bb to the substantially center part in the circumferential direction in the peripheral groove.

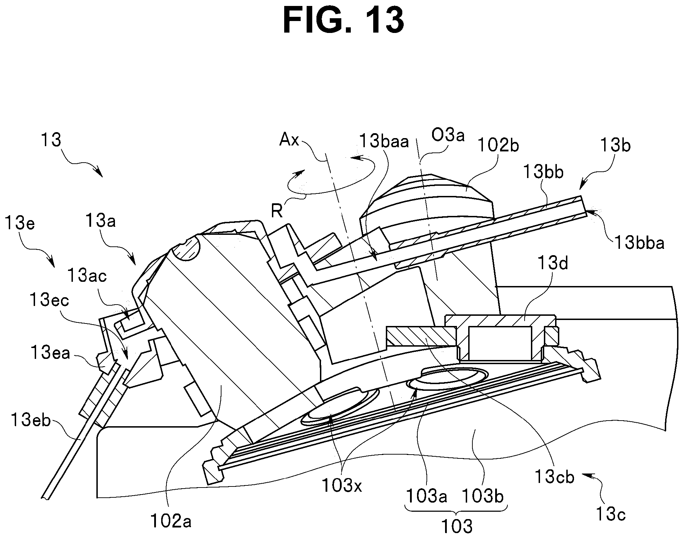

The dish member 13ea has a discharge port 13ec formed on the bottom surface of the peripheral groove at the substantially center part in the circumferential direction (see Fig. 11 and Fig. 13). As a result, the immersion liquid guided from the drainage pipe 13bb to the dish member 13ea is guided to the discharge port 13ec.

Note that the dish member 13ea is fixed to, for example, the revolver fixation section 103b, in the vicinity of an outer circumference edge section of the revolver fixation section 103b (see Fig. 8 and Fig. 10).

The drainage tube 13eb is a tubular member having a proximal end connected to the discharge port 13ec and another end connected to the drainage tank and the drainage pump, which are not shown. The drainage tube 13eb finally discharges the immersion liquid that is discharged from the dish member 13ea via the discharge port 13ec, to the drainage tank (not shown).

The dish fixation member 13ed is a fixation member that supports the dish member 13ea, and is fixed to a part of the revolver fixation section 103b using screw fastening or the like.

Note that the correction-ring remote operation mechanism 15 is disposed in the vicinity of the immersion-liquid supplying apparatus 10. The correction-ring remote operation mechanism 15 is a mechanism unit that acts on the correction ring 102x of the liquid-immersion objective lens 102a to perform optical correction of the liquid-immersion objective lens 102a.

The liquid-immersion objective lens 102a includes, for example, a correction mechanism to correct degradation of image quality (for example, image quality degradation caused by spherical aberration) that is generated when the specimen is observed through the cover glass 110a. This correction mechanism includes the correction ring 102x and a drive mechanism (not shown). Of these, the correction ring 102x is an operation member of a mechanism that adjusts optical performance such as, for example, spherical aberration. The correction ring 102x has a shape of a circular ring that is provided in a freely rotatable manner on the outer circumference of the liquid-immersion objective lens 102a. The amount of force to rotate the correction ring 102x acts on an internal drive mechanism (not shown).

The drive mechanism (not shown) is configured of a mechanism that moves, in tandem with the rotation of the correction ring 102x, a part of a group of a plurality of lenses provided within the liquid-immersion objective lens 102 in the optical axis direction. In this way, the correction mechanism corrects, during microscopic observation, the image quality deterioration such as spherical aberration caused by thickness error or the like of the cover glass. Note that the correction mechanism itself provided in the objective lens is a well-known technology, and a detailed description thereof is omitted.

The correction-ring remote operation mechanism 15 is a mechanism unit for remotely operating the correction ring 102x of the liquid-immersion objective lens 102a. The correction-ring remote operation mechanism 15 includes, for example, a driving force transmission mechanism that transmits the rotational driving force of an electric motor to the correction ring 102x. In this case, the driving force transmission mechanism is configured of a well-known technology formed by combining, for example, a pulley and a belt member, a plurality of gears, and the like. Therefore, the detailed description and illustration thereof are omitted. The configuration of the inverted microscope 1 of the present embodiment is as described above.

Next, an action of the inverted microscope 1 of the present embodiment thus configured is described below. First, when the inverted microscope 1 is in a state for observational use, the user operates to rotate the rotating revolver 103 to place the desired objective lens 102 on the optical axis O3a of the observation optical path O3.

Here, when the liquid-immersion objective lens 102a is placed on the optical axis O3a of the observation optical path O3 to obtain a state where the specimen is observable, the immersion-liquid feeding unit 11 in the immersion-liquid supplying apparatus 10 is in a state as shown in Fig. 6 and Fig. 7. Here, the state where the specimen is observable refers to a state where the liquid-immersion objective lens 102a is placed within a predetermined range including a position where focus is established on the specimen. That is, when in this state, the inverted microscope 1 is focus-controlled.

In the state shown in Fig. 6, the distal end surface of the distal end lens 102aa of the liquid-immersion objective lens 102a is placed at a position close to the cover glass 110a. At this time, the pipe distal end 11ca of the immersion-liquid supply pipe 11c of the immersion-liquid feeding unit 11 is placed at a position in the vicinity of the distal end lens 102aa and out of the light beam passage region of the observation optical path O3.

Furthermore, at this time, a partial region on the distal end side including the pipe distal end 11ca of the immersion-liquid supply pipe 11c is placed in the cap groove 13ab of the objective cap 13a. In this state, when the immersion-liquid supplying apparatus 10 is drive-controlled, the immersion liquid is emitted from the pipe distal end 11ca of the immersion-liquid supply pipe 11c. As a result, the immersion liquid is emitted into the gap space between the distal end surface of the distal end lens 102aa and the cover glass 110a. Then, as shown in Fig. 7, the immersion liquid 200 stays by a predetermined amount by surface tension so as to fill up the gap space between the distal end surface of the distal end lens 102aa and the cover glass 110a. In this state, observation with the inverted microscope 1 is performed.

On the other hand, the immersion-liquid discharging unit 13 at this time is as shown in Fig. 10 and Fig. 11. Note that in Fig. 10 and Fig. 11, illustration of the immersion-liquid feeding unit 11 is omitted.

In the state shown in Fig. 10 and Fig. 11, when the immersion liquid is emitted from the pipe distal end 11ca of the immersion-liquid supply pipe 11c, the predetermined amount of immersion liquid stays in the gap space between the distal end surface of the distal end lens 102aa and the cover glass 110a, as described above. On the other hand, however, the immersion liquid exceeding the predetermined amount flows down in the radial direction from the distal end of the liquid-immersion objective lens 102a and the distal end of the objective cap 13a.

The immersion liquid discharged at this time first flows from the distal end of the objective cap 13a into the drainage groove 13ac, as shown by the sign F in Fig. 11. The immersion liquid then runs along the drainage groove 13ac into the flow path 13baa, via the perforation hole 13ae of the objective cap 13a and the aperture 13bc of the coupling member 13ba of the flow-path-section assembly 13b. Thereafter, the immersion liquid is further guided by the drainage pipe 13bb to the dish member 13ea of the immersion-liquid-reception-section assembly 13e. The immersion liquid then passes from the dish member 13ea via the discharge port 13ec and through the drainage tube 13eb, and is finally discharged to a drainage tank (not shown).

On the other hand, consider, for example, a case where, when a state shown in Fig. 10 (state in which the liquid-immersion objective lens 102a is placed on the optical axis O3a) is present, the rotating revolver 103 is rotation-operated to place another objective lens (for example, the dry objective lens 102b) on the optical axis O3a. Note that the rotation direction of the rotating revolver 103 at this time is the direction indicated by a rotation direction R shown in Fig. 11, i.e., the rotation direction around a rotation center axis Ax of the revolver movable section 103a.

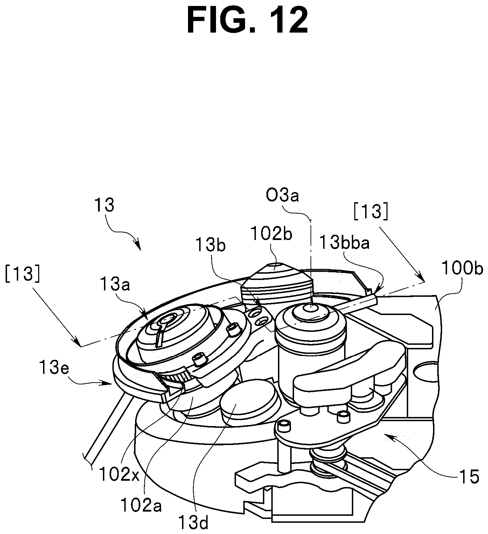

Fig. 12 is an external schematic perspective view showing the immersion-liquid discharging unit when the inverted microscope is in a state for observational use and the liquid-immersion objective lens is placed at a position out of the observation optical path. That is, it is assumed that, at this time, the objective lens (the dry objective lens 102b) other than the liquid-immersion objective lens 102a is placed on the optical axis O3a in the observation optical path O3. Fig. 13 is a schematic cross-sectional view along the [13]-[13] line in Fig. 12.

Suppose that, in the state shown in Fig. 10, the rotating revolver 103 is operated to rotate into a state shown in Fig. 12. At this time, for example, one of the dry objective lenses 102b is placed on the optical axis O3a on the observation optical path O3.

Also in this state, the liquid-immersion objective lens 102a is placed at a position out of the optical axis O3a. At this time, the immersion-liquid discharging unit 13 including the drainage pipe 13bb shifts into a state shown in Fig. 12 and Fig. 13, with constituent sections other than the immersion-liquid-reception-section assembly 13e rotating together with the liquid-immersion objective lens 102a.

When the liquid-immersion objective lens 102a and the immersion-liquid discharging unit 13 are in the state shown in Fig. 10, the position in the horizontal direction of the distal-end discharge port 13bba of the drainage pipe 13bb is placed at a position lower than that of the distal end of the objective cap 13a.

As a result, in the state shown in Fig. 10, the immersion liquid discharged in the radial direction from the distal end of the objective cap 13a is smoothly guided to the drainage groove 13ac, the flow path 13baa, the drainage pipe 13bb, and the dish member 13ea, and is then finally discharged through the drainage tube 13eb into the drainage tank (not shown).

In contrast, when the liquid-immersion objective lens 102a and the immersion-liquid discharging unit 13 are brought into the state shown in Fig. 12, the distal-end discharge port 13bba of the drainage pipe 13bb is placed at a position out of the dish member 13ea. However, at this time, the position in the horizontal direction of the distal-end discharge port 13bba of the drainage pipe 13bb is placed at a position higher than that of the distal end of the objective cap 13a.

As a result, in the state shown in Fig. 12, even if discharged immersion liquid remains within the flow path sections (such as the drainage groove 13ac of the objective cap 13a, as well as the flow path 13baa and the drainage pipe 13bb of the flow-path-section assembly 13b), the remaining discharged immersion liquid will not flow out from the distal-end discharge port 13bba of the drainage pipe 13bb to the outside. Therefore, in the state in Fig. 12, that is, a state in which the liquid-immersion objective lens 102a is placed at a position out of the optical axis O3a on the observation optical path O3, the immersion liquid discharged from the distal end of the objective cap 13a will not unintentionally leak out into the microscope.

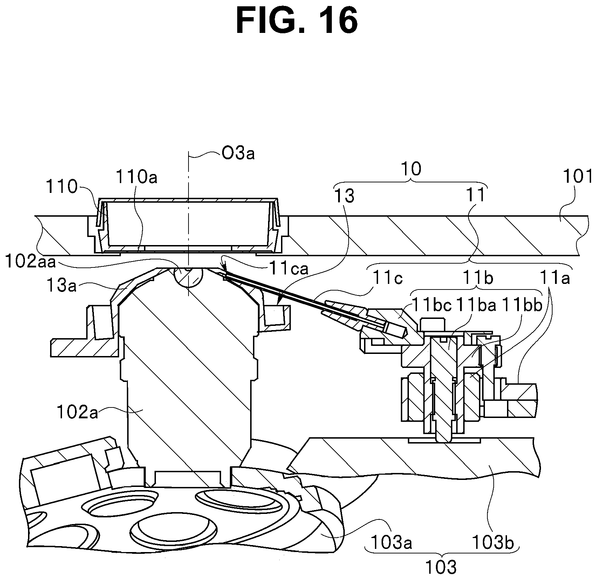

Next, an action of the time of performing observation by using the liquid-immersion objective lens in the inverted microscope of the present embodiment is described below. Fig. 14 to Fig. 17 illustrate the action of the time of performing observation by using the liquid-immersion objective lens in the inverted microscope of the present embodiment. Of these, Fig. 14 is a schematic view showing, in cross section, a positional relationship between the objective lens and the immersion-liquid supplying apparatus when the up-and-down movable unit is at the lowest end in the inverted microscope. Fig. 15 is a schematic view showing, in cross section, the positional relationship between the objective lens and the immersion-liquid supplying apparatus at a time point when the up-and-down movable unit is raised from the state in Fig. 14 and the revolver support section abuts the contact pin. Fig. 16 is a schematic view showing, in cross section, the positional relationship between the objective lens and the immersion-liquid supplying apparatus when the liquid-immersion objective lens is in the focus operation range (mid-position) after the state in Fig. 15. Fig. 17 is a schematic view showing, in cross section, the positional relationship between the objective lens and the immersion-liquid supplying apparatus when the liquid-immersion objective lens is at the upper limit position in the focus operation range after the state in Fig. 16.

Note that, in Fig. 14 to Fig. 17, the following measures are taken to avoid complication of the drawings. For example, with regard to a unit constituted of the focus mechanism 104 and the rotating revolver 103 as the up-and-down movable unit in the inverted microscope 1 of the present embodiment, only the rotating revolver 103 fixed to the focus mechanism 104 is illustrated, and illustration of the focus mechanism 104 itself is omitted. For the immersion-liquid supplying apparatus 10, the immersion-liquid feeding unit 11 and the immersion-liquid discharging unit 13 are illustrated, of which for the immersion-liquid discharging unit 13, only the objective cap 13a is illustrated.

First, the state shown in Fig. 14 is referred to as an observation-operation initial state in the inverted microscope 1. In this state, the objective lens 102 (the liquid-immersion objective lens 102a in the example in Fig. 14) is on the optical axis O3a of the observation optical path O3. At this time, the distal end of the objective lens 102 is in a downward region sufficiently distanced from the specimen (dish 110), which is the observation object. The position of the objective lens 102 at this time is referred to as an evacuation position.

When the objective lens 102 is at the evacuation position, the immersion-liquid feeding unit 11 of the immersion-liquid supplying apparatus 10 has the flange section 11bba abutting a predetermined region on the upper surface of the immersion-liquid feeding base 11a. As a result, the immersion-liquid feeding unit 11 is not moved further in the arrow Z1 direction, and is restricted in the positioning. On the other hand, the focus mechanism 104 and the rotating revolver 103 can be moved further in the arrow Z1 direction.

When the objective lens 102 is at least at the evacuation position or in a downward region with respect to the evacuation position, the pipe distal end 11ca of the immersion-liquid supply pipe 11c is at a position distanced from the distal end of the objective lens 102 in the Z direction. Therefore, in this state, even if the revolver movable section 103a of the rotating revolver 103 is operated to rotate, the objective lens 102 will not interfere with the immersion-liquid supply pipe 11c.

This enables that, when the objective lens 102 is at the evacuation position as shown in Fig. 14, the revolver movable section 103a is rotated, to easily and safely switch the objective lens 102 to the desired one to be used for observation.

Note that the immersion-liquid-reception-section assembly 13e, including the dish member 13ea, is fixed to the revolver fixation section 103b. Therefore, the immersion-liquid-reception-section assembly 13e does not move regardless of the rotation of the revolver movable section 103a, and at this time, the immersion-liquid-reception-section assembly 13e also does not interfere with the rotation of the revolver movable section 103a.

After thus placing the desired objective lens 102 to be used for observation on the optical axis O3a of the observation optical path O3, a predetermined operation is performed for the focus mechanism 104 to move the focus mechanism 104 in the arrow Z2 direction in Fig. 14. This moves the rotating revolver 103 fixed to the focus mechanism 104 in the same arrow Z2 direction in the same manner.

In the rotating revolver 103, the objective lens 102 is fixed to the revolver movable section 103a, and the immersion-liquid discharging unit 13 is fixed to the revolver fixation section 103b. Therefore, these constituent members move in the same direction in the same manner, in tandem with the movement of the focus mechanism 104 and the rotating revolver 103 in the arrow Z2 direction.

Eventually, when the objective lens 102 reaches a predetermined position in the Z direction, a part of the upper surface of the revolver support section 104b or the revolver fixation section 103b abuts the lower end of the contact pin 11ba of the immersion-liquid feeding section 11b. The state at this time is shown in Fig. 15. Here, the predetermined position of the objective lens 102 in the Z direction is the lower limit position within the predetermined range including a position where focus is established on the specimen (focus operation range).

It is so adjusted that, at the time point shown in Fig. 15, i.e., the time point when the upper surface of the revolver fixation section 103b and the lower end of the contact pin 11ba of the immersion-liquid feeding section 11b abut each other, a partial region on the distal end side of the immersion-liquid supply pipe 11c is placed in the cap groove 13ab of the objective cap 13a.

From the time point when the state in Fig. 15 is thus achieved, the movement of the focus mechanism 104 and the rotating revolver 103 in the arrow Z2 direction is further continued, to cause the focus mechanism 104 and the rotating revolver 103 to move the contact pin 11ba of the immersion-liquid feeding section 11b in the same arrow Z2 direction, against the force of the biasing spring 11d. As a result, the objective lens 102 and the immersion-liquid supply pipe 11c move in the same direction in tandem.

At this time, the positional relationship in the Z direction between the objective lens 102 and the immersion-liquid supply pipe 11c is always maintained, and is constant and unchanging. The state during this movement is the state shown in Fig. 16. Then, the state shown in Fig. 17 is reached.

When the state shown in Fig. 17 is reached, the movement of the focus mechanism 104 and the rotating revolver 103 in the arrow Z2 direction is restricted by a regulatory means, not shown. That is, the state shown in Fig. 17 is the upper limit position within the predetermined movement range (focus operation range) of the objective lens 102 in the Z direction.

That is, the focus operation range of the inverted microscope 1 is within a range where the state shown in Fig. 15 is the lower limit position and the state shown in Fig. 17 is the upper limit position. The specimen is observed while the objective lens 102 is placed on the optical axis O3a at the observation position and is being moved within the focus operation range. When the inverted microscope 1 is in such a state, the pipe distal end 11ca of the immersion-liquid supply pipe 11c is placed at a position outside of the light beam passage region of the observation optical path O3 of the objective lens 102. Thus, the microscope has a configuration that enables to perform feeding of the immersion liquid even while the inverted microscope 1 is in use for observation.

Note that, when the focus mechanism 104 and the rotating revolver 103 are descended in the arrow Z1 direction from the state shown in Fig. 17, after transitioning through the state shown in Fig. 16, the state shown in Fig. 15 is eventually reached. During the period from the state shown in Fig. 17 until reaching the state shown in Fig. 15, the movement of the focus mechanism 104 and the rotating revolver 103 in the arrow Z1 direction is transmitted to the objective lens 102 and the immersion-liquid feeding section 11b that includes the immersion-liquid supply pipe 11c. As a result, the objective lens 102 and the immersion-liquid supply pipe 11c move in the same direction in tandem.

When the focus mechanism 104 and the rotating revolver 103 are further descended in the arrow Z1 direction from the state shown in Fig. 15, the movement of the focus mechanism 104 and the rotating revolver 103 in the arrow Z1 direction is released from being transmitted to the objective lens 102 and the immersion-liquid supply pipe 11c. This allows the immersion-liquid supply pipe 11c to stay in the predetermined position (the positioned position shown in Fig. 14), while allowing the objective lens 102 (the rotating revolver 103) to continue to move in the arrow Z1 direction.

As described above, according to the one embodiment, the immersion-liquid feeding section 11b, including the immersion-liquid supply pipe 11c, is configured to be fixed to the support stand 100. This configuration enables restraining the weight increase of the rotating revolver 103 (the objective lens 102). Therefore, it is made possible to suppress, by the focus mechanism 104, vibration generated when the rotating revolver 103 (objective lens 102) is driven in the Z direction, and to always perform stable observation.

In addition, the immersion liquid feeding tube 11e connected to the immersion-liquid feeding unit 11 is also configured to be fixed to the support stand 100. This configuration enables to ensure the stability of the constituent members without the concern of the immersion liquid feeding tube 11e becoming entangled, when the rotating revolver 103 is rotated to perform switching of the objective lens 102, and to further contribute to the miniaturization of the microscope itself.

It is so configured that, when the objective lens 102 moves in the Z direction within the focus operation range by the focus mechanism 104, the immersion-liquid feeding section 11b including the immersion-liquid supply pipe 11c moves in the same direction in tandem with the Z direction movement of the objective lens 102. With this configuration, it is allowed to stably maintain the positional relationship between the distal end of the objective lens 102 and the pipe distal end 11ca of the immersion-liquid supply pipe 11c at a constant state within the focus operation range for performing observation. Therefore, the immersion liquid feeding can be performed stably even during observation.

In addition, even if variations are generated in the distance from the upper surface of the stage 101 to the observation surface, since the positional relationship in the Z direction between the objective lens 102, the immersion-liquid supply pipe 11c, and the observation surface is maintained constant, the feeding of the immersion liquid can always be performed stably.

It is so configured that, when the objective lens 102 is in a state of being placed in the downward region out of the focus operation range, the immersion-liquid supply pipe 11c is released from the tandem operation with the movement of the objective lens 102 in the Z direction. With this configuration, the liquid-immersion objective lens 102a and the immersion-liquid supply pipe 11c are at positions distanced from each other in the Z direction, in their positional relationship. Therefore, it is made possible to avoid interference between the objective lens 102 and surrounding constituent members when switching the objective lens 102.

Thus, the switching operation of the objective lens 102 can be performed easily and safely. For example, it is possible to restrain such occurrences as that, when switching the objective lens 102, the interference between the objective lens 102 and the surrounding constituent members causes leakage or dispersion of remaining immersion liquid, or the like, in the immersion-liquid supply pipe 11c or the like.

It is so configured that, in a state where the objective lens 102 is in the focus operation range and observation of the specimen is being performed, the pipe distal end 11ca of the immersion-liquid supply pipe 11c is placed at a position outside of the light beam passage region of the observation optical path O3 of the objective lens 102. This configuration allows feeding of the immersion liquid to be performed at any desired time without interrupting the observation, even during observational use.

For example, also in the case of performing an observation over a long period of time, such as time-lapse observation, the feeding of the immersion liquid to the liquid-immersion objective lens 102a can be performed at the desired timing without interrupting the observation. Thus, evaporation and the like of the immersion liquid occurring during a prolonged observation can be easily addressed.

In addition, in the case of performing a prolonged observation or the like, by employing, for example, a configuration to automatically control the immersion liquid feeding, it is made possible to automatically perform the immersion liquid feeding according to conditions such as prescribed time intervals, thus making it easier to perform a continuous prolonged observation.

The present disclosure is not limited to the above-described embodiments, and it is of course possible to implement various variations and applications within the scope that does not depart from the gist of the disclosure. Furthermore, the above embodiments include inventions in various stages, and various inventions can be extracted by appropriately combining a plurality of configuration requirements disclosed. For example, even if some of the configuration requirements are deleted from all the configuration requirements shown in the one embodiment above, and still the problem to be solved by the disclosure can be solved and the effect of the disclosure can be obtained, the configuration from which these requirements are deleted can be extracted as the disclosure. Furthermore, constituent elements across different embodiments may be combined as appropriate. This disclosure is not restricted by any particular embodiment thereof except for being limited by the appended claims.

### DESCRIPTION OF THE REFERENCE NUMERALS

- 1: inverted microscope
- 10: immersion-liquid supplying apparatus
- 11: immersion-liquid feeding unit
- 11a: immersion-liquid feeding base
- 11aa: through hole
- 11b: immersion-liquid feeding section
- 11ba: contact pin
- 11bb: positioning member
- 11bba: flange section
- 11bbb: hollow shaft section
- 11bc: pipe holding section
- 11c: immersion-liquid supply pipe
- 11ca: pipe distal end
- 11e: immersion-liquid feeding tube
- 11f: immersion-liquid-feeding-section fixing plate
- 11g: lock set screw
- 13: immersion-liquid discharging unit
- 13a: objective cap
- 13aa: cap through hole
- 13ab: cap groove
- 13ac: drainage groove
- 13ad: coupling flange
- 13ae: perforation hole
- 13b: flow-path-section assembly
- 13ba: coupling member
- 13baa: flow path
- 13bb: drainage pipe
- 13bba: distal-end discharge port
- 13bc: aperture
- 13c: immersion-liquid-discharging-unit attachment member
- 13ca: main body section
- 13cb: arm section
- 13d: fixation lid
- 13da: thread section
- 13db: lid section
- 13e: immersion-liquid-reception-section assembly
- 13ea: dish member
- 13eb: drainage tube
- 13ec: discharge port
- 13ed: dish fixation member
- 15: correction-ring remote operation mechanism
- 51, 52: bolt
- 100: support stand
- 100a: support-stand base section
- 100b: support-stand rear section
- 100c: support-stand front section
- 101: stage
- 101a: stage aperture
- 102: objective lens
- 102a: liquid-immersion objective lens
- 102aa: distal end lens
- 102b: dry objective lens
- 102x: correction ring
- 103: rotating revolver
- 103a: revolver movable section
- 103b: revolver fixation section
- 103x: RMS section
- 104: focus mechanism
- 104a: focus base section
- 104b: revolver support section
- 105: observation optical system
- 105a: eyepiece
- 105b: lens barrel
- 105c: mirror
- 105d: image formation lens
- 106: first illumination optical system
- 106a: condensing lens
- 107: second illumination optical system
- 107a: condensing lens
- 107b: dichroic mirror
- 108: electronic parts group
- 110: dish
- 110a: cover glass
- O1: first illumination optical path
- O2: second illumination optical path
- O3: observation optical path
- O3a: optical axis

## Claims

1. An inverted microscope, comprising:
a liquid-immersion objective lens;
a dry objective lens;
a rotating revolver configured to be capable of mounting the liquid-immersion objective lens and the dry objective lens, and further configured to rotate to switch between the liquid-immersion objective lens and the dry objective lens to place the switched lens in an observation optical path;
a support stand that is a fixation section;
a focus mechanism configured to move the rotating revolver with respect to the support stand, in a direction along an optical axis of the objective lens that is at an observation position;
an immersion-liquid feeding base fixed to the support stand;
an immersion-liquid feeding section configured to be movable with respect to the immersion-liquid feeding base in the direction along the optical axis, the immersion-liquid feeding section including an immersion-liquid supply pipe fixed thereto, the immersion-liquid supply pipe being configured to supply immersion liquid to the liquid-immersion objective lens; and
a transmission mechanism configured to mechanically transmit a movement of the focus mechanism in the direction along the optical axis to the immersion-liquid feeding section, when the liquid-immersion objective lens is on the optical axis and is placed within a predetermined range including a position where focus is established on the specimen, and further configured to release the movement of the focus mechanism in the direction along the optical axis from being transmitted to the immersion-liquid feeding section, when the liquid-immersion objective lens is on the optical axis and is placed in a downward region out of the predetermined range.

2. The inverted microscope according to claim 1, further comprising:
a flow path section configured to guide the immersion liquid discharged from a distal end of the liquid-immersion objective lens to a dish member fixed on an outer circumference side of the rotating revolver.

3. The inverted microscope according to claim 2, wherein the flow path section further includes a pipe-shaped member that guides the immersion liquid discharged from the distal end of the liquid-immersion objective lens to the dish member.

4. The inverted microscope according to claim 3, further comprising:
a ring-shaped member provided at the distal end of the liquid-immersion objective lens, the ring-shaped member guiding to the pipe-shaped member the immersion liquid discharged in a radial direction from the distal end of the liquid-immersion objective lens.

5. The inverted microscope according to claim 4, wherein the ring-shaped member further includes a groove in which the immersion-liquid supply pipe is placed.

6. The inverted microscope according to claim 3, wherein the pipe-shaped member is mounted integrally on the liquid-immersion objective lens, and moves together with the rotating revolver when the rotating revolver is operated.

7. The inverted microscope according to claim 2 or claim 3, wherein the flow path section is fixed to the rotating revolver by using an RMS section, of RMS sections of the rotating revolver, on which neither of the liquid-immersion objective lens and the dry objective lens is mounted.

8. The inverted microscope according to claim 1, wherein the liquid-immersion objective lens includes a correction ring that adjusts spherical aberration, and the inverted microscope further comprises a remote operation mechanism that remotely operates the correction ring.

9. The inverted microscope according to claim 1, wherein when a movable-side member of the focus mechanism reaches a predetermined Z position, the movable-side member contacts and presses the immersion-liquid feeding section and the transmission mechanism moves the immersion-liquid feeding section in the optical axis direction.

10. The inverted microscope according to claim 1, wherein a distal end of the immersion-liquid supply pipe is placed at a position outside of a light beam passage region of the liquid-immersion objective lens or the dry objective lens arranged at an observation position.
